Europäisches Patentamt

European Patent Office

Office européen des brevets

(11) Veröffentlichungsnummer: **0 264 343 B1**

# EUROPÄISCHE PATENTSCHRIFT

(45) Veröffentlichungstag der Patentschrift: 26.06.91

(51) Int. Cl.⁵: **B60C 27/14**

(21) Anmeldenummer: 87730121.8

(22) Anmeldetag: 07.10.87

(54) Gleitschutzvorrichtung.

(30) Priorität: 08.10.86 CH 4016/86

(43) Veröffentlichungstag der Anmeldung:
20.04.88 Patentblatt 88/16

(45) Bekanntmachung des Hinweises auf die
Patenterteilung:
26.06.91 Patentblatt 91/26

(84) Benannte Vertragsstaaten:
AT CH DE IT LI

(56) Entgegenhaltungen:
EP-A- 0 226 131
DE-A- 3 142 489
DE-A- 3 227 872
US-A- 4 089 359

(73) Patentinhaber: **RUD-Kettenfabrik Rieger &
Dietz GmbH u. Co.
Friedensinsel
W-7080 Aalen 1(DE)**

(72) Erfinder: **Zeiser, Peter, Dipl.-Ing.
Eckener Höhe 1
W-7080 Aalen-Wasseralfingen(DE)**

(74) Vertreter: **Böning, Manfred, Dr. Ing. et al
Patentanwälte Dipl.-Ing. Dieter Jander Dr.
Ing. Manfred Böning Leistikowstrasse 2
W-1000 Berlin 19(DE)**

**Beschreibung**

Die Erfindung betrifft eine Gleitschutzvorrichtung für Fahrzeugräder mit einer an der Felge des Rades befestigbaren Halterung für radial nach außen gerichtete Arme, die an ihren äußeren Enden Ösen aufweisen, in denen gelenkig mit ihren Enden auf der Lauffläche des Reifens zu liegen kommende Bügel gelagert sind, die ein Laufnetz halten, wobei der lichte Innenraum der Ösen einen Querschnitt hat, der begrenzte Ausgleichsbewegungen der Gelenkachsen der Bügel zuläßt.

Aus der DE-OS 31 42 489 ist eine Gleitschutzvorrichtung der vorstehenden Art bekannt, bei der die Ösen von Jochen der aus Rundmaterial gebogenen Bügel gebildete Gelenkachsen mit leichtem Spiel derart umschließen, daß die Bügel gegenüber den Ösen, von der Möglichkeit geringfügiger, nämlich spielbedingter Hin- und Herbewegungen abgesehen, lediglich Schwenkbewegungen um die Längsachse ihrer Gelenkachsen ausführen können. Um ein Ausweichen der Ösen in Richtung zur Radachse zu ermöglichen, wenn die in sie eingehängten Bügel die Aufstandsfläche des Reifens passieren, d.h. dieser eine Walkbewegung ausführt, sind die gabelförmig ausgebildeten Arme dieser Vorrichtung hin- und herverschiebbar in der Halterung geführt. Entsprechende Verhältnisse liegen bei einer anderen in der EP-A2 0 226 131 (Stand der Technik Art. 54(3) EPÜ) beschriebenen Gleitschutzvorrichtung vor, bei der die die Bügel tragenden Arme aus Bandmaterial bestehen. Auch hier können die in einem Gehäuse der Halterung geführten Arme beim Abrollen des Reifens eine Ausgleichsbewegung in Richtung ihrer Längsachse ausführen. Die an den Enden der Arme angeordneten Ösen sind wie bei der bekannten Gleitschutzvorrichtung jedoch im wesentlichen kreisförmig ausgebildet.

Beim praktischen Einsatz der bekannten Gleitschutzvorrichtungen hat sich gezeigt, daß die in die Ösen der Arme eingehängten Bügel Schwachstellen bilden. Versuche, auftretenden Brüchen der Bügel durch Einsatz hochwertigerer Materialien entgegenzuwirken, führten ebensowenig zu einem befriedigenden Ergebnis wie Veränderungen der Halterung zwecks Verminderung der Reibung in den Führungen für die Arme.

Der Erfindung liegt die Aufgabe zugrunde, bei einer Gleitschutzvorrichtung der in Betracht gezogenen Art die Haltbarkeit der das Laufnetz haltenden Bügel nachhaltig zu verbessern. Diese Aufgabe wird erfindungsgemäß in überraschend einfacher Weise durch die Merkmale des Anspruchs 1 gelöst.

Versuche mit erfindungsgemäßen Gleitschutzvorrichtungen ergaben eine erhebliche Standzeiterhöhung der Bügel und somit der Lebensdauer der Vorrichtungen insgesamt. Bei einer Analyse der Ursachen für den erzielten Erfolg konnte festgestellt werden, daß die gewählte Ösenform einerseits wider Erwarten die Führung der Bügel beim Einsatz der Gleitschutzvorrichtungen nicht beeinträchtigt und andererseits den Gelenkachsen der Bügel beim Abrollen des Reifens Ausgleichbewegungen ermöglicht, die eine Übertragung Verschleiß-und Dauerbrüche begünstigender Kräfte zwischen der Öse und den Bügeln auf ein Minimum reduziert. Die Bügel können aufgrund der beschriebenen Ausbildung der sie haltenden, gewissermaßen Mehrfachgelenke bildenden Ösen beim Einlauf in den Keilspalt zwischen Reifen und Fahrbahn begrenzte Kippbewegungen um ihre Längsachse ausführen, und darüber hinaus haben ihre Gelenkachsen die Möglichkeit, sich um einen Betrag translatorisch in den ovalen Ösen zu verlagern, der ausreichend groß ist, um ein schlagartiges Auftreffen der Gelenkachsen der Bügel auf den Ösengrund zu verhindern. Die Länge der Arme der Gleitschutzvorrichtungen sollte dabei so auf den Durchmesser des Reifens abgestimmt sein, daß die Arme mit den Ösen beim Passieren der Walkzone des Reifens infolge Fahrbahnkontaktes der Ösen um ausreichend große Beträge zur Achse des Fahrzeugrades verschoben werden. Das Oval der Öse bildet dabei eine die Übertragung schlagartiger Kräfte zwischen der Gelenkachse und der Öse verhindernde Pufferzone.

Die Erfindung wird im folgenden anhand eines in der beigefügten Zeichnung dargestellten bevorzugten Ausführungsbeispieles näher erläutert. Es zeigen:

Fig. 1     die perspektivische Ansicht eines mit einer Gleitschutzvorrichtung bestückten Fahrzeugreifens,

Fig. 2     einen Querschnitt durch ein auf einer Fahrbahn stehendes belastetes Fahrzeugrad,

Fig. 3     in vergrößertem Maßstab die Lage der Gelenkachse eines sich außerhalb der Reifenaufstandsfläche befindlichen Bügels der Gleitschutzvorrichtung gemäß Fig. 1 in einer ihn haltenden Öse und

Fig. 4     in vergrößertem Maßstab die Lage der Gelenkachse eines sich im Bereich der Reifenaufstandsfläche befindlichen Bügels der Gleitschutzvorrichtung gemäß Fig. 1 in einer ihn haltenden Öse.

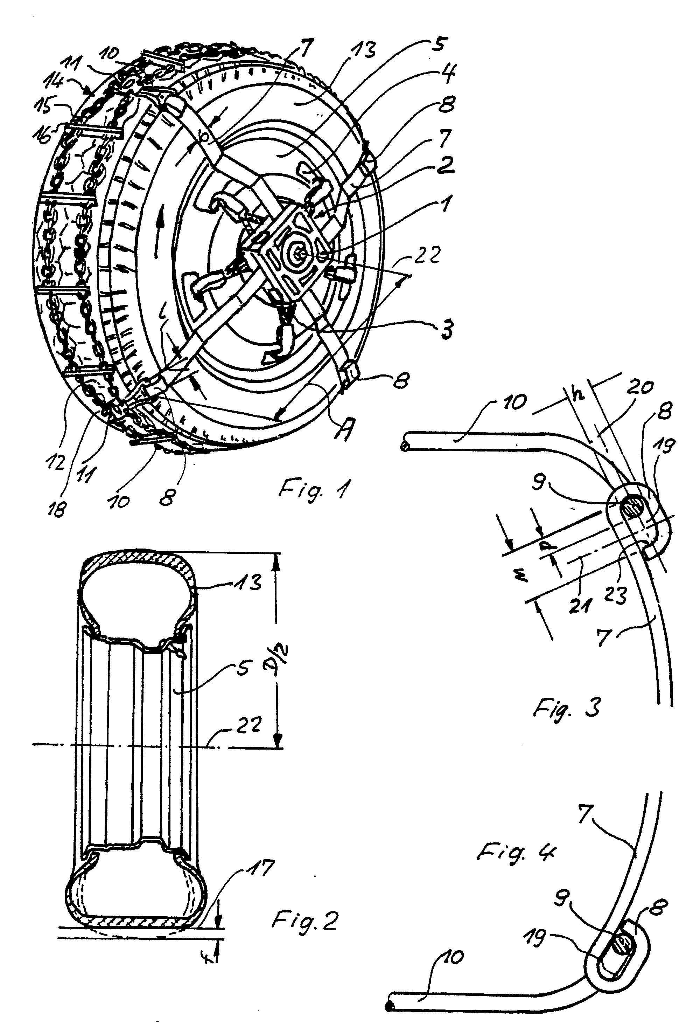

In Fig. 1 ist 1 das drehbare Gehäuse einer allgemein mit 2 bezeichneten Halterung, die mit Hilfe von elastischen Spannelementen 3 in Ausnehmungen 4 der Felge 5 eines Fahrzeugrades 6 einhängbar ist. Im Gehäuse 1 der Halterung 2 sind hin- und herverschiebbar vier Arme 7 geführt, deren äußere Enden Ösen 8 bilden. In den Ösen 8 sind die Gelenkachsen 9 von Bügeln 10 gelagert, deren den Ösen 8 abgewandte Enden 11 in der in Fig. 1 gezeigten Betriebsstellung der Gleitschutzvorrichtung etwa in der Mitte der Lauffläche 12 eines Reifens 13 zu liegen kommen. An den Enden 11 der aus Rundstahl gebogenen Bügel 10 ist ein Laufnetz 14 befestigt, das aus Kettensträngen 15 und Abstandshaltern 16 besteht. Gleitschutzvorrichtungen der beschriebenen Art unterscheiden sich von klassischen Gleitschutzketten dadurch, daß bei ihnen innere Seitenketten fehlen und der beim Montieren der Vorrichtung zunächst außerhalb der Aufstandsfläche des Fahrzeugrades liegende Teil des Laufnetzes beim Anfahren des Fahrzeuges automatisch auf die Lauffläche des Reifens überführt wird.

Wie in Fig. 2 angedeutet, federn Reifen 13 unter der Radlast im Bereich ihrer Aufstandsfläche 17 um einen bestimmten Betrag f ein, der beim PKW-Reifen in der Größenordnung von etwa 10 mm liegt. Infolge der Abplattung des Reifens 13 im Bereich seiner Aufstandsfläche 17 heben sich die in Umlaufrichtung jeweils vorn liegende Kanten 18 der Bügel beim Einlauf in die Aufstandsfläche 17 von der Lauffläche 12 ab, und der abgehobene Teil schlägt auf die Fahrbahn auf, ehe noch eine Radialbewegung der Arme 7 nach innen erfolgt. Dies führt zu einer Torsionsbeanspruchung der Bügel. Um unter den geschilderten Bedingungen eine verschleiß- und kräftemäßige Überbeanspruchung der Bügel 10 zu verhindern, sind die lichten Innenräume 19 der Ösen derart oval ausgebildet, daß ihre Gelenkachsen 9 sowohl Ausgleichbewegungen in Richtung der Längsachse 20 des Ovals als auch Kippbewegungen um dessen Querachse 21 ausführen können, wobei die Kippbewegungen um die Querachse 21 Kippbewegungen der Bügel 10 um deren Längsachse entsprechen. Um das Kippvermögen sicherzustellen, ist beim beschriebenen Ausführungsbeispiel die Breite b der aus Bandmaterial, insbesondere Bandstahl, hergestellten Arme 7 etwa 10% kleiner als die Länge 1 der Gelenkachsen 9 der Bügel 10.

Als vorteilhaft hat es sich erwiesen, wenn die lichte Weite w der Ösen 8 gleich dem 1,5- bis dreifachen Durchmesser d der Gelenkachse 9 und ihre lichte Höhe h gleich deren 1,1- bis 1,5-fachem Durchmesser d ist. Auf diese Weise wird ein hinreichender Freiraum für die Gelenkachsen der in den Bereich der Reifenaufstandsfläche einlaufenden und die Aufstandsfläche passierenden Bügel 10 geschaffen. In diesem Zusammenhang ist darauf hinzuweisen, daß es kurz nach dem Kontakt zwischen den Bügeln 10 und der Fahrbahn auch zu einem Kontakt zwischen den Ösen 8 und der Fahrbahn kommt, falls die Ösen bei montierter Gleitschutzvorrichtung einen Abstand A von der Achse

22 des Fahrzeugrades 6 haben, der annähernd gleich dem halben Durchmesser D des Fahrzeugrades 6 ist. Ein solcher Kontakt führt zur bereits beschriebenen Radialverschiebung der Arme 7 und somit zu einer Art scheinbarer Vergrößerung der lichten Weite w Ovals der Öse 8, wandert doch der Ösengrund 23 vom Augenblick des Ösen-Fahrbahnkontaktes an zusammen mit der jeweiligen Gelenkachse 9 zur Achse 22 des Fahrzeugrades.

Dadurch, daß die Gelenkachsen 9 in den lichten Innenräumen 19 der Ösen 8 sowohl Schwenkbewegungen um ihre eigene Längsachse als auch Schwenkbewegungen um die Querachse 21 des Ovals und Transversalbewegungen in Richtung der Längsachse 20 des Ovals ausführen können, werden die Verschleiß- und Kräfteverhältnisse an den Verbindungsstellen zwischen den Bügeln 10 und den Armen 7 erheblich verbessert, ohne daß eine Verschlechterung des Sitzes des Laufnetzes 14 eintritt.

## Ansprüche

1. Gleitschutzvorrichtung für Fahrzeugräder (6) mit einer an der Felge (5) des Rades befestigbaren Halterung (2) für radial nach außen gerichtete Arme (7), die an ihren äußeren Enden ösen (8) aufweisen, in denen gelenkig mit ihren Enden auf der Lauffläche des Reifens zu liegen kommende Bügel (10) gelagert sind, die ein Laufnetz halten, wobei der lichte Innenraum (19) der Ösen (8) einen Querschnitt hat, der begrenzte Ausgleichsbewegungen der Gelenkachsen (9) der Bügel (10) zuläßt, dadurch gekennzeichnet, daß der lichte Innenraum (19) einen ovalen Querschnitt hat, der Ausgleichsbewegungen der gelenkachsen (9) in Richtung der Läufachse (20) des ovalen Querschnittes um einen Betrag von Betrag von mindestens dem 0,5-fachen Durchmesser (d) der Gelenkachsen (9) zuläßt.

2. Gleitschutzvorrichtung nach Anspruch 1, dadurch gekennzeichnet, daß die Längsachse (20) der Querschnitte der lichten Innenräume (19) im wesentlichen parallel zum die Ösen (8) seitlich abstützenden Teil der Flanke des Reifens (13) des Fahrzeugrades (6) verläuft.

3. Gleitschutzvorrichtung nach Anspruch 1 oder 2, dadurch gekennzeichnet, daß die Ösen (8) von den umgebogenen Enden der Arme (7) gebildet werden.

4. Gleitschutzvorrichtung nach einem der Ansprüche 1 bis 3, dadurch gekennzeichnet, daß die Arme (7) eine Breite (b) haben, die kleiner als die ganze Länge (1) und größer als die halbe Länge (1) der Gelenkachsen (9) der Bügel (10) ist.

5. Gleitschutzvorrichtung nach einem der Ansprüche 1 bis 4, dadurch gekennzeichnet, daß die Bügel (10) um ihre Längsachse kippbar gegenüber den Ösen (e) angeordnet sind.

6. Gleitschutzvorrichtung nach einem der Ansprüche 1 bis 5, dadurch gekennzeichnet, daß die Arme (7) aus Bandmaterial bestehen.

7. Gleitschutzvorrichtung nach einem der Ansprüche 1 bis 6, dadurch gekennzeichnet, daß die Bügel (10) aus Rundmaterial gebogen sind.

8. Gleitschutzvorrichtung nach einem der Ansprüche 1 bis 7, dadurch gekennzeichnet, daß die Gelenkachsen (9) der Bügel (10) von einem Querjoch der Bügel (10) gebildet werden.

9. Gleitschutzvorrichtung nach einem der Ansprüche 1 bis 8, dadurch gekennzeichnet, daß die lichte Weite (w) der Ösen (8) den dreifachen Durchmesser (d) der Gelenkachsen (9) nicht überschreitet.

10. Gleitschutzvorrichtung nach einem der Ansprüche 1 bis 9, dadurch gekennzeichnet, daß die lichte Höhe (h) der Ösen (8) gleich dem 1,1- bis 1,5-fachen Durchmesser (d) der Gelenkachsen (9) ist.

11. Gleitschutzvorrichtung nach einem der Ansprüche 1 bis 10, dadurch gekennzeichnet, daß die die Bügel (10) tragenden Arme (7) hin- und herverschiebbar an der Halterung (2) gelagert sind.

12. Gleitschutzvorrichtung nach einem der Ansprüche 1 bis 11, dadurch gekennzeichnet, daß die Ösen (8) bei montierter Gleitschutzvorrichtung einen Abstand (A) von der Achse (22) des Fahrzeugrades (6) einnehmen, der annähernd gleich dem halben Durchmesser (D) des Fahrzeugrades ist.

**Claims**

1. Anti-slip device for vehicle wheels (6), having a holder (2), which can be fastened to the rim (5) of the wheel, for arms (7) which are directed radially outwards and have at their outer ends eyes (8) in which stirrups (10) are mounted in an articulated manner, which stirrups (10) come to lie with their ends on the tread of the tyre and hold a running net, the clear inner space (19) of the eyes (8) having a cross-section which permits limited compensating movements of the articulation pivots (9) of the stirrups (10), characterised in that the clear inner space (19) has an oval cross-section which permits the compensating movements of the articulation pivots (9) in the direction of the longitudinal axis (20) of the oval cross-section by an amount of at least 0.5 x the diameter (d) of the articulation pivots (9).

2. Anti-slip device according to Claim 1, characterised in that the longitudinal axis (20) of the cross-section of the clear inner spaces (19) runs essentially parallel to the flank part, laterally supporting eyes (8), of the tyre (13) of the vehicle wheel (6).

3. Anti-slip device according to Claim 1 or 2, characterised in that the eyes (8) are formed by the bent-over ends of the arms (7).

4. Anti-slip device according to one of Claims 1 to 3, characterised in that the arms (7) have a width (b) which is less than the entire length (1) and greater than half the length (1) of the articulation pivots (9) of the stirrups (10).

5. Anti-slip device according to one of Claims 1 to 4, characterised in that the stirrups (10) are arranged so as to be tiltable about their longitudinal axis relative to the eyes (8).

6. Anti-slip device according to one of Claims 1 to 5, characterised in that the arms (7) are made of strip material.

7. Anti-slip device according to one of Claims 1 to 6, characterised in that the stirrups (10) are bent from round material.

8. Anti-slip device according to one of Claims 1 to 7, characterised in that the articulation pivots (9) of the stirrups (10) are formed by a cross-yoke of the stirrups (10).

9. Anti-slip device according to one of Claims 1 to 8, characterised in that the clear width (w) of the eyes (8) does not exceed three times the diameter (d) of the articulation pivots (9).

10. Anti-slip device according to one of Claims 1 to 9, characterised in that the clear height (h) of the eyes (8) is equal to 1.1 to 1.5 x the diameter (d) of the articulation pivots (9).

11. Anti-slip device according to one of Claims 1 to 10, characterised in that the arms (7) carrying the stirrups (10) are mounted so as to be displaceable in a reciprocating manner on the holder (2).

12. Anti-slip device according to one of Claims 1 to 11, characterised in that, when the anti-slip device is mounted, the eyes (8) assume a distance (A) from the axis (22) of the vehicle wheel (6) which is approximately equal to half the diameter (D) of the vehicle wheel.

**Revendications**

1. Dispositif antidérapant pour des roues de véhicules (6), avec un système d'attache (2) qui peut être fixé sur la jante (5) de la roue et qui sert à attacher des bras (7), dirigés radialement vers l'extérieur, qui présentent à leurs extrémités extérieures des boucles (8) dans lesquelles sont articulées les extrémités d'étriers (10) qui viennent se placer sur la bande de roulement du pneumatique et y maintiennent un réseau de roulement, l'espace intérieur ouvert (19) des boucles (8) possédant une section qui autorise des mouvements de compensation limités des axes d'articulation (9) des étriers (10), caractérisé en ce que l'espace intérieur ouvert (19) possède une section ovale qui autorise des mouvements de compensation limités des axes d'articulation (9) en direction de l'axe longitudinal (20) de la section ovale, d'une amplitude égale à au moins 0,5 fois le diamètre (d) des axes d'articulation (9).

2. Dispositif antidérapant selon la revendication 1, caractérisé en ce que l'axe longitudinal (20) des sections des espaces intérieurs ouverts (19) s'étend sensiblement parallèlement à la partie du flanc du pneumatique (13) de la roue de véhicule (6) qui soutient latéralement les boucles (8).

3. Dispositif antidérapant selon la revendication 1 ou 2, caractérisé en ce que les boucles (8) sont formées par les extrémités recourbées des bras (7).

4. Dispositif antidérapant selon l'une des revendications 1 à 3, caractérisé en ce que les bras (7) possèdent une largeur (b) qui est inférieure à la longueur totale (1) et supérieure à la moitié de la longueur (1) des axes d'articulation (9) des étriers (10).

5. Dispositif antidérapant selon l'une des revendications 1 à 4, caractérisé en ce que les étriers (10) sont disposés avec possibilité de basculement autour de leur axe longitudinal par rapport aux boucles (8).

6. Dispositif antidérapant selon l'une des revendications 1 à 5, caractérisé en ce que les bras (7) sont réalisés en feuillard.

7. Dispositif antidérapant selon l'une des revendications 1 à 6, caractérisé en ce que les étriers (10) sont courbés à partir d'un matériau rond.

8. Dispositif antidérapant selon l'une des revendications 1 à 7, caractérisé en ce que les axes d'articulation (9) des étriers (10) sont formés par une partie centrale transversale des étriers (10).

9. Dispositif antidérapant selon l'une des revendications 1 à 8, caractérisé en ce que la largeur intérieure (w) des boucles (8) ne dépasse pas trois fois le diamètre (d) des axes d'articulation (9).

10. Dispositif antidérapant selon l'une des revendications 1 à 9, caractérisé en ce que la hauteur intérieure (h) des boucles (8) est égale à 1,1 à 1,5 fois le diamètre (d) des axes d'articulation (9).

11. Dispositif antidérapant selon l'une des revendications 1 à 10, caractérisé en ce que les bras (7), qui portent les étriers (10), sont montés mobiles en va-et-vient sur le système d'attache (2).

12. Dispositif antidérapant selon l'une des revendications 1 à 11, caractérisé en ce que les boucles (8), lorsque le dispositif antidérapant est monté, prennent une distance (A) de l'axe (22) de la roue de véhicule (6) qui est approximativement égale à la moitié du diamètre (D) de la roue.

Fig. 1

Fig. 2

Fig. 3

Fig. 4